(19) Europäisches Patentamt
European Patent Office
Office européen des brevets

(11) **EP 4 075 342 A1**

(12) **EUROPEAN PATENT APPLICATION**

(43) Date of publication:
**19.10.2022 Bulletin 2022/42**

(21) Application number: **21168515.1**

(22) Date of filing: **15.04.2021**

(51) International Patent Classification (IPC):
**G06N 3/063** (2006.01)　　　**G06N 3/04** (2006.01)

(52) Cooperative Patent Classification (CPC):
**G06N 3/0635; G06N 3/0454**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventor: **Kaltiokallio, Kim**
**00340 Helsinki (FI)**

(74) Representative: **Nokia EPO representatives**
**Nokia Technologies Oy**
**Karakaari 7**
**02610 Espoo (FI)**

(54) **CONVOLUTION ENGINE FOR IN-MEMORY COMPUTING**

(57)　Techniques for performing a convolution operation using In-Memory Computing are disclosed. The example apparatus includes a plurality of analog filter circuits, each of which is to receive a plurality of weight control signals corresponding to a filter. The filter is replicated across the filter circuits to cover at least an entire width of an input window. The apparatus also includes a plurality of input drivers to provide input signals to the filter circuits, wherein the input signals comprise at least one full row of the input window. The apparatus also includes a processor to generate the weight control signals to set a plurality of filter weights of the filter circuits to generate a dot product for each filter circuit by multiplying the input signals and the plurality of weights. The dot products are stored to an output feature map representing a convolution of the input window and the filter.

FIG. 1

## Description

### TECHNOLOGICAL FIELD

Example embodiments relate to In-Memory Computing (IMC) and, more specifically, a convolution engine that can be implemented for In-Memory Computing.

### BACKGROUND

Integrated Circuits (ICs) are widespread in modern electronics and may be used to implement a wide range of processing and memory devices. In-memory computing technology is a developing area which aims to provide improvements in computational performance. Traditional systems tend to store data as electrical charges on a memory that is separate from the processor which performs tasks such as arithmetic and logic functions. With the increase in data used for certain applications, such as with neural network processing, data movement between the processor and memory may present one of the more critical performance and energy bottlenecks. In-memory computing can improve processing performance through the use of memory technologies that are also able to perform certain computational tasks such as the arithmetic and/or logical functions.

### BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to an example embodiment, there is an apparatus for performing a convolution operation using In-Memory Computing. The example apparatus includes a plurality of analog filter circuits, each of which is to receive a plurality of weight control signals corresponding to a filter. The filter is replicated across the plurality of analog filter circuits to cover at least an entire width of an input window. The apparatus also includes a plurality of input drivers to provide input signals to the plurality of analog filter circuits, wherein the input signals comprise at least one full row of the input window. The apparatus also includes a processor to generate the weight control signals to set a plurality of filter weights of the analog filter circuits to generate a dot product for each analog filter circuit by multiplying the input signals and the plurality of weights. The dot products are stored to an output feature map representing a convolution of the input window and the filter.

The dot product may be a partial dot product computed for a single channel of input. Additionally, the apparatus may also include additional analog filter circuits for processing additional input channels to generate additional partial dot products, and a summing circuit to sum the partial dot products generated for each analog filter circuit and each corresponding additional analog filter circuit.

Each weight of each analog filter circuit may be applied by a basic computing element configured to multiply the weight by a corresponding input from the input feature map in an analog domain. The basic computing element can include a resistance ladder network and a switch configured to route current from the resistance ladder network to an output terminal or to ground.

The apparatus may be configured to process the input window in a plurality of steps. At each step, the plurality of filter circuits can process an entire width of the input window. The apparatus can also include a data shifter to shift the plurality of weights and the input signals relative to one another to cover each row position combination between the input window and the plurality of analog filter circuits. The data shifter may be a row rotator configured to shift the plurality of weights applied to the analog filter circuits to each row position of each analog filter circuit. The data shifter may also be a row multiplexer configured to shift the input data to each row position of each analog filter circuit.

The apparatus may be configured such that the entire input window is processed in parallel to perform the convolution. The plurality of input drivers may include an input driver for each input of the input window, wherein each input driver is coupled to a separate filter circuit comprising a plurality of filter weights. The output of each filter weight may be routed to sum the output to a correct one of the dot products. The routing of the input signals to the weights and the routing of the output of each filter weight remains static for an entire convolution operation.

According to another example embodiment, there may be provided a method that includes receiving an input window and a filter to be processed according to a convolution operation. The method also includes setting weights of a plurality of analog filter circuits corresponding to the filter, wherein the filter is replicated across the plurality of analog filter circuits to cover at least an entire width of the input window. The method also includes providing input signals to the plurality of analog filter circuits to generate a plurality of dot products in parallel, wherein the input signals represent at least an entire width of the input window. The method also includes storing each generated dot product to an output feature map representing a convolution of the input window and the filter.

The input window may be processed in a plurality of steps. At each step, the plurality of filter circuits can process an entire width of the input window. The method can also include shifting, at each step, the plurality of weights and the input signals relative to one another to cover each row position combination between the input window and the plurality of analog filter circuits. Shifting the plurality of weights and the input signals relative to one another can include shifting the plurality of weights applied to the analog filter circuits while the input signals from the input window remains stationary, shifting the input data while the weights applied to the analog filter circuits remain stationary.

In some embodiments, the entire input window can be processed in parallel to perform the convolution. Each filter can include a plurality of weights, and the method can include determining a routing configuration for routing the input signals to the weights and for routing an output of each weight to a summing circuit of a corresponding dot product of the plurality of dot products. The routing configuration remains static for the entire convolution operation.

## BRIEF DESCRIPTION OF THE DRAWINGS

Example embodiments will now be described, by way of non-limiting example, with reference to the accompanying drawings, in which:

Fig. 1 is a diagram illustrating a convolution operation between two matrices;
Fig. 2 is a circuit diagram of an example of a basic computing element in accordance with embodiments;
Fig. 3 is a block diagram of an example filter circuit for use in a convolution process in accordance with embodiments;
Fig. 4 shows an example of a neural network used to perform convolution in accordance with embodiments;
Fig. 5 shows an example of a neural network having a row rotator in accordance with embodiments;
Fig. 6 shows three steps of the convolution process using the neural network 500 of Fig. 5;
Fig. 7 shows an example of a neural network having an input data multiplexer in accordance with embodiments;
Fig. 8 is an example calculation unit comprising multiple filter layers in accordance with embodiments;
Fig. 9 is a convolution engine in accordance with embodiments;
Fig. 10 is an example data input circuit in accordance with embodiments;
Fig. 11 is an example saturated summing amplifier in accordance with embodiments;
Fig. 12 is an example analog to digital converter in accordance with embodiments;
Fig. 13 is a process flow diagram summarizing an example method for performing convolution using an in-memory computing device in accordance with embodiments;
Fig. 14 is a block diagram showing a medium that contains logic for controlling an in-memory computing device in accordance with embodiments;
Fig. 15 is an illustration of a convolution operation that can be performed using a 4-by-4 input window with 1 p padding and a 3-by-3 filter with filter weights a-i;
Fig. 16 shows each of the partial sums that will be obtained according to the convolution operation shown in Fig. 15;
Fig. 17 shows part of an example convolution circuit with a routing configuration obtained corresponding to the information shown in Fig. 16;
Fig. 18 is a convolution engine configured to perform convolution for an entire input window in parallel using the concepts described above in relation to Figs. 15-17;
Fig. 19 describes a technique wherein multiple convolution engines can be combined to handle larger input window size; and
Fig. 20 is a block diagram showing a medium that contains logic for controlling an in-memory computing device configured to perform a convolution operation for a full input window in parallel in accordance with embodiments.

## DETAILED DESCRIPTION

Example embodiments relate to integrated circuits (ICs) and integrated circuit fabrication techniques applicable to In-Memory Computing (IMC), also sometimes referred to as Computing-in-Memory (CIM) or Processing-in-Memory (PIM). More specifically, the present disclosure describes techniques for implementing a convolution apparatus useful for In-Memory Computing.

Convolution is a mathematical operation on two functions (f and g) that produces a third function (f * g) that expresses how the shape of one is modified by the other. The convolution function, also sometimes referred to as cross-correlation or sliding dot product, is produced by determining the integral of the product of the two functions for all possible values of shift. Convolution is used in a variety of computational operations, including signal processing, image processing, neural networks, and others.

In computer systems, convolution is a mathematical operation between two matrices often referred as an input window and a filter. Sometimes filter is defined as 3D structure of multiple 2D kernels stacked together. We use general term filter here. For example, given a 10x10 matrix (the input window) and a 3x3 matrix (the filter), the process is to multiply the input window and the filter for each possible combination of positions as you superimpose the filter matrix over the input matrix. This can be accomplished by overlaying the filter at the first position, multiplying the overlapping values and add them together to get the output (dot product). Next, the filter is shifted one column over and the same calculations are repeated. Once at the end of the row, the filter is shifted down one row and the process repeated. This continues until the end of the input matrix is reached.

To perform convolution in In-Memory computing, one of the functions is typically expressed in digital form and converted to an analog representation, which is input to a Vector Matrix Multiplier (VMM) that performs multiplication in the analog domain and represents the second function. The output of the VMM is then converted back to a digital representation. The Digital-to-Analog Converters (DACs) and Analog-to-Digital converters (ADCs) involved in this operation consume a large amount of silicon area overhead that degrades the power consumption benefits that In-Memory Computing would otherwise provide.

Techniques for performing convolution operations fully in the analog domain are possible, but they suffer from performance issues that make them non-optimal, as will be described further below. The present disclosure discloses a technique wherein the convolution can be performed fully in the analog domain with improved power consumption and performance.

In some embodiments, the convolution process is improved by processing whole rows simultaneously. To do this, the filter weights are copied to multiple filter circuits that cover the entire row of the input window and make all of the calculations for a single row in parallel. In order to capture all of the possible overlay positions, the input or the filter weights may be shifted once to the left and once to the right for each row. In this way, all of the calculations for a single row can be made in three steps. The data shifting may be performed by rerouting the weights within the filter circuits or multiplexing the inputs to different positons of the filter circuits.

In some embodiments, an entire input window can be processed simultaneously, rather than going row by row. In these embodiments, the inputs and the filter weights are all permanently routed to one another to get the correct outputs. Analysis of the results one would get by overlaying the filter matrix over the input matrix at each overlay position, can be used to determine which combination of inputs and weights are going to affect each output. A routing structure can be implemented based on this knowledge of how the various values interact to the affect the final outputs. All of the calculations are done in parallel according to how the inputs and various filter weights are routed to one another for the various combinations. Accordingly, the filter matrix is not scanned across the input matrix. Rather, the input values, filter weights, and the filter outputs are routed in such a way as to obtain the same result without scanning.

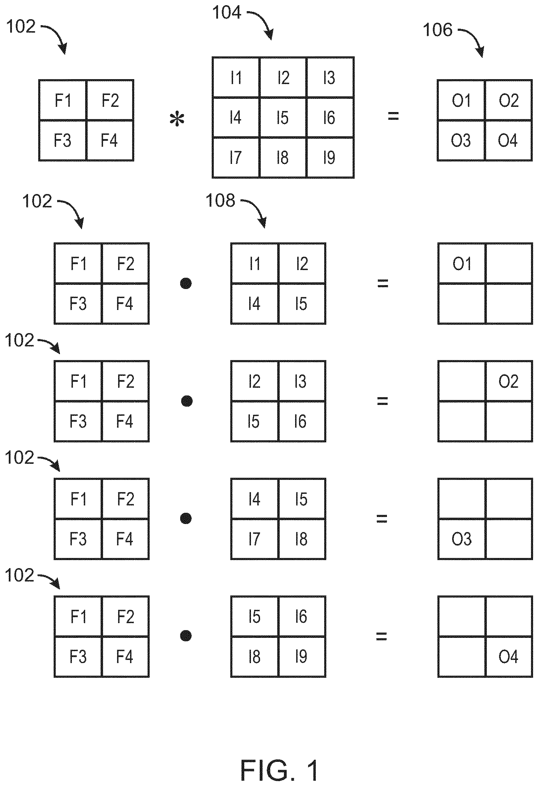

Fig. 1 is a diagram illustrating a convolution operation between two matrices. For purposes of the present description, the two matrices may be described as a filter 102 and an input window 104. The filter 102 is a matrix (size k-by-k) of scalar values that serve as multipliers. The input window 104 is a matrix (size W-by-W) of scalar values that represent some body of data to be processed by the filter, such as an image, for example. The convolution of the filter 102 and the input window 104 produces the output feature map 106. To perform the convolution, the filter 102 is applied to portions of the input window 104 in steps. At each step, the dot product of the filter 102 and the overlapping portion of the input window 104 is computed to generate one of the outputs of the output feature map 106.

In some embodiments, the convolution engine described herein may be configured to perform pooling. Pooling is an operation wherein a specified number of neighboring output elements are merged together, either by averaging them together or by taking the maximum value among the neighboring output elements as the output. Pooling reduces the output dimension and saves computations on the following layer. In the above example, 2-by-2 pooling would cause four neighboring output elements to be merged together, resulting in a four-fold reduction in the number of outputs. In the context of the present example, 2-by-2 pooling would mean that the four dot products of the output feature map 106 are averaged together to form a single result. Of course it will be appreciated that a typical convolution operation will have large number of outputs.

In the example shown in Fig. 1, the step size is one and the position of the filter 102 is stepped across the columns of the input window 104 from left to right until the end of the row is reached, then stepped down one row and repeated, resulting in four steps total. Each step of the convolution process is shown in Fig. 1 to better explain the process. The portion of the input window 104 processed at each step is referred to herein as the input feature map 108. At each step, a new input feature map 108 is generated from a portion of the input window 104 and input to the filter 102. At step 1, the input feature map 108 includes values 11, 12, 14, and 15. Thus, the dot product of the filter 102 and the input feature map 108 at step 1 is $F1 \times I1 + F2 \times I2 + F3 \times I4 + F4 \times I5 = O1$ (output 1). At each step, a new input feature map 108 is generated corresponding to the portion of the input window 104 at that step. The process is repeated until each value of the output feature map 106 has been generated. The final output feature map 106 represents the convolution of the input window and the filter.

In the present example, the filter 102 may be implemented as an analog Vector Matrix Multiplier (VMM) wherein each element of the matrix is a scalar value referred to herein as a weight. The input feature maps 108 at each step are fed into the VMM to generate the output. Based on this example, it can be seen that several elements of the input window 104 will be fed into the VMM multiple times. For example, input I5 is input to the VMM for all four steps. Additionally, it will be appreciated that a typical input window can include several hundreds or thousands of elements. Thus, the inefficiency of inputting the same data multiple times can increase processing latency and power consumption.

Embodiments of the present disclosure describe a technique wherein the convolution can be processed by whole rows at a time. In other words, a whole row of elements from the input window 104 can be processed by the filter 102 at each step. This reduces the number of times that each data element of the input window 104 is loaded into the filter 102, thereby reducing processing latency and power consumption.

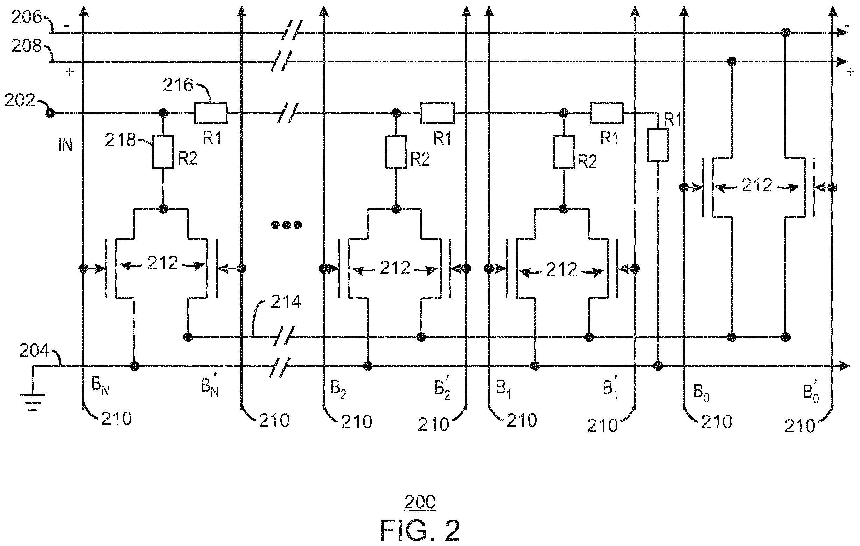

Fig. 2 is a circuit diagram of an example of a basic computing element in accordance with embodiments. The basic computing element 200 may be used to provide an analog representation of each of the weights of the filter. In some embodiments, the basic computing element 200 may also be used to generate the signal input to each weight. The basic computing element 200 includes several terminals, including a voltage input (IN) terminal 202, a ground terminal 204, subtraction terminals 206, summation terminals 208, and control bit terminals 210. The voltage input terminal 202 is configured to receive an input signal that represents an element of data received from an input window. The basic computing element 200 can divide the voltage at the input terminal 202 to some fraction and output the result to either the subtraction terminal 206 or the summation terminal 208. The value output by the basic computing element 200 is determined by the setting of the control bit terminals 210, which control the switches 212.

Each pair of switches 212 operate in coordination to route a portion of the current received at the voltage input terminal 202 to ground 204 or to an output rail 214. The last pair of switches controls the sign of the output by coupling the output rail 214 to either the subtraction terminal 206 or the summation 208.

Current from the input terminal 202 is routed to the switches 212 through a resistance ladder network made up of a set of current dividers arranged in series. Each current divider include a first resistor (R1) 216 and a second resistor (R2) 218 arranged such that current received at the input is divided through the first resistor 216 and the second resistor 218. Current through the second resistor passes to the pair of switches 212 and current through the first resistor 216 passes to the next pair of switches in the series. The second resistor 218 may have a resistance that is an integer multiple of that of the first resistor 216. In some embodiments, the second resistor 218 is approximately double the first resistor 216 so that the voltage level at the next pair of switches in the series will be approximately half the voltage level at the prior pair of switches. In this configuration, the first pair of switches in the series will have two times the effect on the output of the basic computing element 200 compared to the second pair of switches, the second pair of switches will have two times the effect on the output of the basic computing element 200 compared to the third pair of switches, and so on.

Each pair of switches determines whether current passing through the second resistor 208 is routed to the output (i.e., subtraction terminal 206 or summation terminal 208) or ground 204. The state of the switches 212 may be set via the control bit terminals 210. As stated above, the control bit terminals 210 can include any suitable number of control bits depending on the number of current dividing stages. The control bits are shown in Fig.

2 as Bo to $B_N$, where $B_N$ can be considered the most significant bit of a binary number, $B_1$ can be considered the least significant bit of the binary number, and $B_0$ controls the sign of the resulting number (i.e., whether the resulting voltage is applied to the subtraction terminal 206 or summation terminal 208.) In Fig. 2, $B'_0$ to $B'_N$ represent the complimentary values to $B_0$ to $B_N$, such that if $B_N$ turns the switch on, the complimentary switch controlled by $B_N'$ is switched off, and vice versa.

In this way, the N-bit binary number represented by the control bits $B_N$ to $B_0$ can be converted to an analog voltage, $V_{out}$, at the output terminal of the basic computing element 200. It may therefore be referred to also as an N-bit multiplier. With the configuration described above, the output, $V_{out}$, will be determined according to the following formula:

$$Vout = B_0 \cdot Vin \cdot \sum_{i=1}^{N} \left( B_i \cdot 2^{i-N-1} \right)$$

In the above formula, a value of 1 represents the state of the switch as being turned on, while a value of 0 represents the state of the switch as being turned off.

In some cases, the both the $B_0$ and $B'_0$ switches may be turned off, thereby disconnecting the ladder network from both the summing terminal 208 and subtraction terminal 206. In this configuration, so there is no loading or current flow, which reduces power consumption. This may be useful if the weight to be represented by the basic computing element 200 is zero or if the basic computing element 200 is a component of a filter circuit not currently in use.

The basic computing elements 200 shown in FIG. 2 can be connected in parallel to other basic computing elements 200 by routing of the same control bits to the additional basic computing elements. In this way, the values represented by the control bits can be replicated across several basic computing elements 200 in parallel.

The switches 212 may be any suitable type of switch, including complementary metal-oxide-semiconductor (CMOS) transistors such as P-type (PMOS) or N-type (NMOS) transistors. Accordingly, each weight can be implemented using only two transistors per bit. By contrast, a typical static random access memory (SRAM) includes six transistors. Implementing the basic computing element without memory greatly reduces the foot print of basic computing element, which allows for a much larger number of multipliers in the same area. According to embodiments of the present techniques, weight memory is shared between several basic computing elements so that many copies of the same filters are generated, each of which receives different input data representing different positions of the filters over the input activation area.

The resistors 216 and 218 may be formed as high-resistance contacts. By "high-resistance" is meant that the resistive contacts have a resistance value that is much higher than the on-resistance of the switches 212. For example, in very low power applications, the resistance value may be in the order of several Mega ohms, whereas in high speed applications, the resistance value may be in the order a hundred kilo ohms. In some embodiments, the resistance of resistors 216 and 218 may be approximately one Mega Ohm.

Each resistor 216 and 218 may be formed by atomic layer deposition (ALD) to provide the one or more high-resistance contacts between metal layers. ALD is a thin-film deposition technique based on the use of a chemical vapour deposition. In basic terms, a film is grown on a substrate by exposing the substrate to so-called precursor gases in a sequential way that enables accurate control of the film growth and structure. Forming a resistive ladder network using ALD enables at least part of a basic computing element to be formed in a very area and cost-efficient way, because the resistive contacts can be packed in a very dense way and the resistance values determined, for example, based on the cross-sectional area and height of the resistive contacts, assuming the resistors are grown in a vertical way between the metal layers in the manner of three-dimensional structures such as nanostructures. The resistors 216 and 218 may be made of any suitable material, for example, aluminum oxides, titanium oxides, or combinations thereof. The surface area of one resistor 216 or 218 may be only in the order of a few hundred square nanometers or thereabouts.

The basic computing elements 200 are configured so that they do not contain any memory components to control the switches. Thus, the basic computing element is simplified to include only switches and resistors so that the silicon area will be extremely small, which enables the convolution process described herein to be performed. For example, in an embodiment where weights have sign and four bits (N=5), the basic computing element 200 will have a total of 9 resistors and 10 switches. Additionally, weight values can be quantized to smaller precision. A basic computing element 200 with sign and 3 bits (N=4) may provide suitable performance while only using 7 transistors and 8 switches. Analog input signals and resulting dot products can have higher precision and this is beneficial especially when summing up partial sums from multiple channels. By contrast, a similar type of digital implementation may require more than 100 times more transistors and area.

It will be appreciated that the basic computing element 200 shown in Fig. 2 is only one example of an analog basic computing element that can be used to perform the convolution process described herein. In some embodiments, the basic computing element 200 may be a tapped resistor string or other configuration. Additionally, the basic computing element 200 may include any suitable number of bits depending on the degree of precision and the number or discrete analog values to be represented.

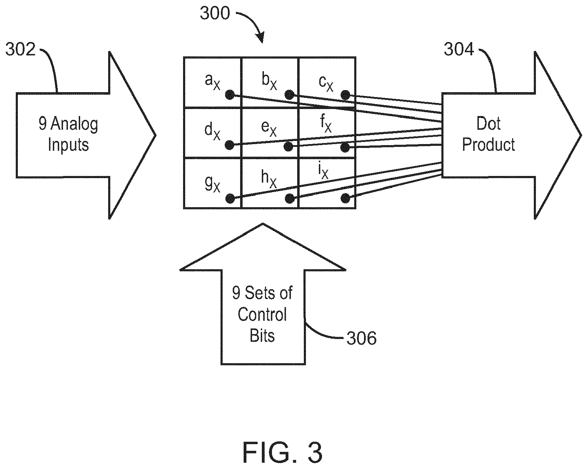

Fig. 3 is a block diagram of an example filter circuit for use in a convolution process in accordance with embodiments. The example filter circuit 300 of Fig. 3 is configured to represent a 3-by-3 filter and thus includes nine total values, referred to herein as weights, labeled ax through bx. The filter circuit 300 is an analog filter circuit configured to receive a set of analog input values 302, each input value to be multiplied by a corresponding one of the weights of the filter circuit 300. The input values 302 are received from an input feature map 108, which is a selected portion of the input window 104 as described in Fig. 1. The filter circuit 300 then generates a total output 304, which is the sum of the products between each input value and its corresponding weight, i.e., the dot product of the input feature map 108 and the filter. The value of each weight is controlled by a set of control bits 306 that determine the value of each weight in accordance with the particular filter being used. In this case, nine sets of control bits are used, and each set controls one of the nine weights.

Each weight of the filter circuit 300 may be implemented as a basic computing element such as the basic computing element 200 shown in Fig. 2. Accordingly, with reference to Fig. 2, each weight is associated with an input 202 configured to receive one of the nine analog input signals 302. The input signals 302 may be routed from a driver that can be part of digital-to-analog converter (DAC) or the input signals may be provided from a buffer that holds analog input signals. Each input 202 is multiplied by the corresponding weight to generate individual outputs for each weight. The output of each weight may be the subtraction terminal 206 and/or summation terminal 208 of the basic computing element 200, as shown in Fig. 2. The individual outputs of each weight are wired together, such that the individual outputs are summed to provide the total output 304 of the filter circuit, which represents the dot product of the input feature map and the filter. As described further below, the output 304 may be a partial dot product that is added to the output of additional filters processing different channels of input. Each individual set of control bits among the nine sets of control bits 306 may be the control bits 210 shown in Fig. 2, such that the value of each weight of the filter circuit 300 is controlled by controlling the control bits 210 of the basic computing element 200.

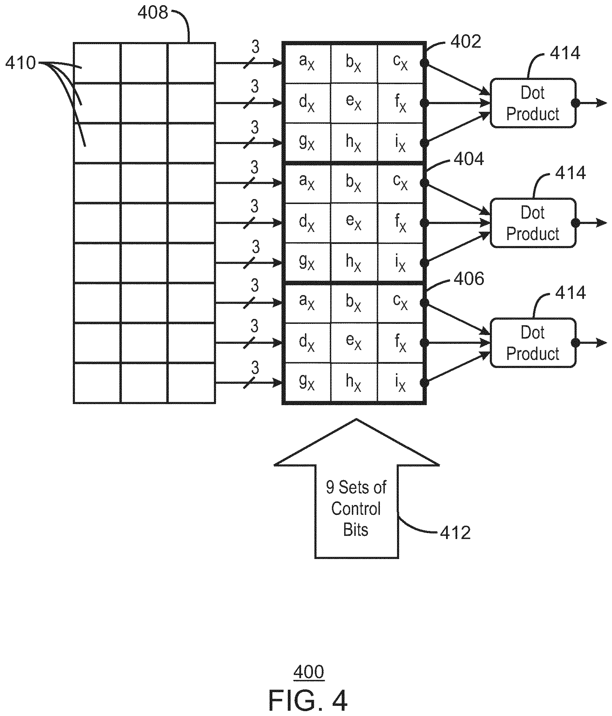

It will be appreciated that the filter circuit 300 is one example of a filter that can be used in convolution, and that other filter sizes may be used. For example, filter sizes of 3-by-3, 5-by-5, 7-by-7, 9-by-9 or 11-by-11 may be used as well as other sizes. To perform the convolution process described herein, multiple filter circuits 300 will be controlled in parallel and configured to cover an entire row of input from the input window, as shown in Fig. 4.

Fig. 4 shows an example of a neural network used to perform convolution in accordance with embodiments. The neural network layer 400 operates in a manner similar to the filter circuit 300 shown in Fig. 3. However, the filter weights are replicated across multiple filter circuits 402, 404, and 406 cover the entire width of the input window. In this example, the width of the input window is nine elements across, and the size of the filter is 3-by-3. Thus, the size of the input feature map 408 is 9-by-3 to cover the full 9 element width of the input window and 3 rows of the input window. Each element 410 of the input feature map 408 represents a different element from the input window. For purposes of the present description, each column of the input feature map 408 actually represents a different row of the input window. The input feature map may be stored to an analog or digital memory device. If analog memory is used, the source followers of the memory cells can drive the weight elements. The data buffer may also be a digital memory buffer wherein the digital data is converted to analog signals through a set of Digital to Analog Converters (DACs).

The size of the filter is 3-by-3 and the values of the filter are replicated across to the multiple filter circuits 402, 404, 406 to cover the entire width of the input window so that the entire input feature map 408 can be processed in parallel. The filter values may be copied to each filter circuit 402, 404, 406 by routing the nine sets of control bits 412 (corresponding with the control bits 210 of Fig. 2) to each of the filter circuits.

As shown in Fig. 4, the value from each element of the input feature map 408 is input to the corresponding weight of the corresponding filter circuit to perform multiplication of each of the values in parallel. The resulting output from each multiplication operation performed by a particular filter circuit is summed to generate the total output of for the filter circuit. Thus, three different dot products 414 are generated in parallel. Each output dot product 414 represents a value of the output feature map or a partial value to be added to the output generated by parallel channels. Once the output values are captured, the next step of the convolution process can proceed by inputting the next rows of input window to the input feature map 408 and generating a new set of dot products with the new input. The output values may be stored as digital values after all channels have been processed and the partial dot products from the different channels have been added together to form the total dot products for each filter circuit. Additionally, if pooling is implemented, neighboring total dot products may be sampled and averaged together before being converted to digital values and stored in digital memory. In some embodiments, the total dot products may be stored as analog values to be fed into a next layer of processing. Various other implementations are also possible.

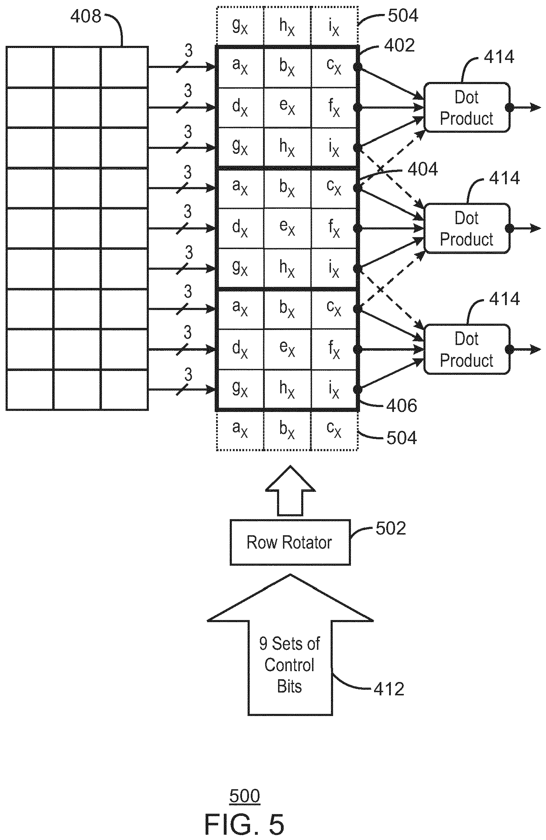

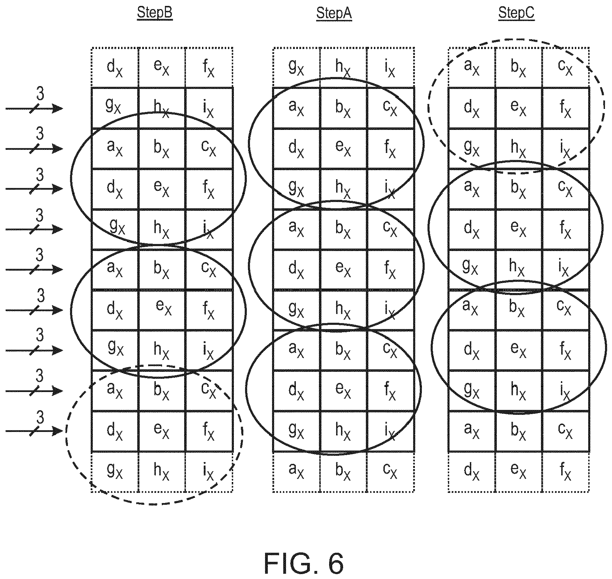

As discussed above in relation to Fig. 1, one parameter of the convolution process is the step size. The neural network layer described in Fig. 4 is suitable of a convolution with a step size of three, because the filter is stepped across the input by three element increments. Figs. 5 and 6 below demonstrate techniques for accomplishing a step size of one with similar circuitry.

Fig. 5 shows an example of a neural network having a row rotator in accordance with embodiments. The neural network 500 operates in a manner similar to the neural network 400 shown in Fig. 4. As in Fig. 4, the filter weights are copied to multiple filter circuits 402, 404, and 406 to cover the entire width of the input window, which is processed in parallel to generate the dot products 414. However, in this embodiment, the neural network layer 400 also includes a row rotator configured to shift the positions of the weights within the filter circuits 402, 404, 406. The row rotator 502 operates by shifting the weights one row up and one row down to cover all of the row position combinations used in a convolution with a step size of one. Additionally, the outputs from each filter element will be routed differently according to weight positions to change where the wired summing is made, as shown by the dotted lines.

The row rotator 502 may operate by receiving the weights and routing the weights to different rows for different steps of the convolution process. In some embodiments, a row of padding 504 may be added to the control bit data used to control the weights, as represented by the dotted lines. The weight control lines are statically routed to the weights but weight values $a_x$ - $i_x$ are rotated inside row rotator. The process performed using the row rotator can be better understood with reference to Fig. 6.

Fig. 6 shows three steps of the convolution process using the neural network 500 of Fig. 5. The three steps are labeled step A, step B, and step C. The convolution can be processed with or without zero-padding. At step B, in an embodiment without zero padding, the rotator shifts all of the weights up by one row compared to step A, and two additional dot products are generated. At step C, the rotator shifts all of the weights down by one row compared to step A, and two additional dot products are generated. For all three steps, the input from the input feature map 408 remains stationary. As mentioned in relation to Fig. 5, the outputs from each filter element will be routed differently according to weight positions to change where the wired summing is made. The solid circles represent the grouping of the filter elements that will be summed together at each step. In this way, all seven of the filter positions can be covered for a step size of one, resulting in seven dot products for the seven different filter positions.

In some embodiments, the processing at each step can be performed to implement a zero-padding strategy. In zero-padding, the input window may be processed as having a border of additional inputs valued at zero. If zero-padding is used, then at step B, an additional dot product can be generated for the three bottom rows shown with the dotted circle. This additional dot product equates to the results that would be generated if the input window had an additional bottom row of inputs set at zero. Similarly, at step C, an additional dot product can be generated for the three rows shown with the dotted circle. This additional dot product equates to the results that would be generated if the input window had an additional top row of inputs set at zero. In this way, 3 dot products are generated at each step for a total of nine dot products.

Each one of the dot products represents one of the elements of the resulting output feature map or a partial value to be added to the output generated by parallel channels. It will be appreciated that the weights can be shifted in any order, since the order in which the results are calculated will not affect the final result.

After the dot products are generated for each of the 3 filter positions, the input feature map can be updated to include the next row of the input window. To update the input feature map, each column of the input feature map may be shifted to the right by one to make room for the new row of data from the input window, with the last column being removed from the input feature map. The process describe above can then be repeated using the new input feature map to generate 9 new dot products to be stored to the output feature map.

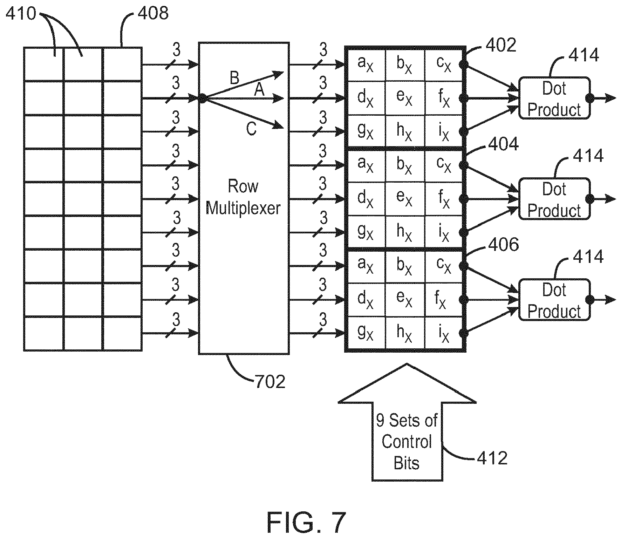

Fig. 7 shows an example of a neural network having an input data multiplexer in accordance with embodiments. The neural network 700 operates in a manner similar to the neural network 400 shown in Fig. 4. As in Fig. 4, the filter weights are copied to multiple filter circuits 402, 404, and 406 to cover the entire width of the input window, which is processed in parallel to generate the dot products 414. However, in this embodiment, the neural network 700 includes a row multiplexer 702 (or demultiplexer) configured to shift the positions of the input data received from the input feature map 408. The row multiplexer 702 operates by shifting the input data one row up and one row down relative to the filter circuits 402 404 406 to cover all of the row position combinations used in a convolution with a step size of one. The row multiplexer 702 receives the input data from the data buffer that stores the input feature map and routes the input data to different rows for different steps of the convolution process. In this embodiment, the input data stored to the data buffer and the filter weights remain stationary. Additionally, the routing of the outputs from the filter weights also remains stationary.

Fig. 7 also shows the routing performed by the row multiplexer 702 for the three steps of the convolution process, labeled A, B, and C. At step B, the row multiplexer 702 shifts each row of input data up by one row compared to step A. At step B, the row multiplexer 702 shifts each row of input data down by one row compared to step A. At each step three dot products are generated in parallel for a total of nine dot products. Each one of the nine dot products is stored as one of the elements of the resulting output feature map. It will be appreciated that the rows of inputs can be shifted in any order, since the order in which the results are calculated will not affect the final result.

After the dot products are generated for each of the 3 input data positions, the input feature map can be updated to include the next row of the input window. To update the input feature map, each column of the input feature map may be shifted to the right by one to make room for the new row of data from the input window, with the last column being removed from the input feature map. The process describe above can then be repeated using the new input feature map to generate 9 new dot products to be stored to the output feature map.

The embodiment shown in Fig. 7 may be beneficial if the convolutional layer use fixed weights (i.e., weights that are hardwired and non-adjustable as opposed to weights that are set by control bits.) Such convolutional layers could be used for an example in first convolutional stages where low-level features are extracted by the filters, such as edges, illumination levels, pixel area movement, and the like. Fixed value weights can be implemented without any switches and memory, so the area efficiency is extremely high making it possible to implement a larger number of filters and larger size filters very efficiently.

It will be appreciated that the neural network layers described in relation to Figs. 4-7 are examples, and that additional features may be added without deviating from the scope of the present claims. For example, the data buffer used to store the input feature map 408 may include one or more additional buffer columns that can be used as active input buffers such that analog data can be transferred for the next processing step while previous input columns are processed. Additionally, the techniques described above can be performed using different filter sizes and different input window sizes.

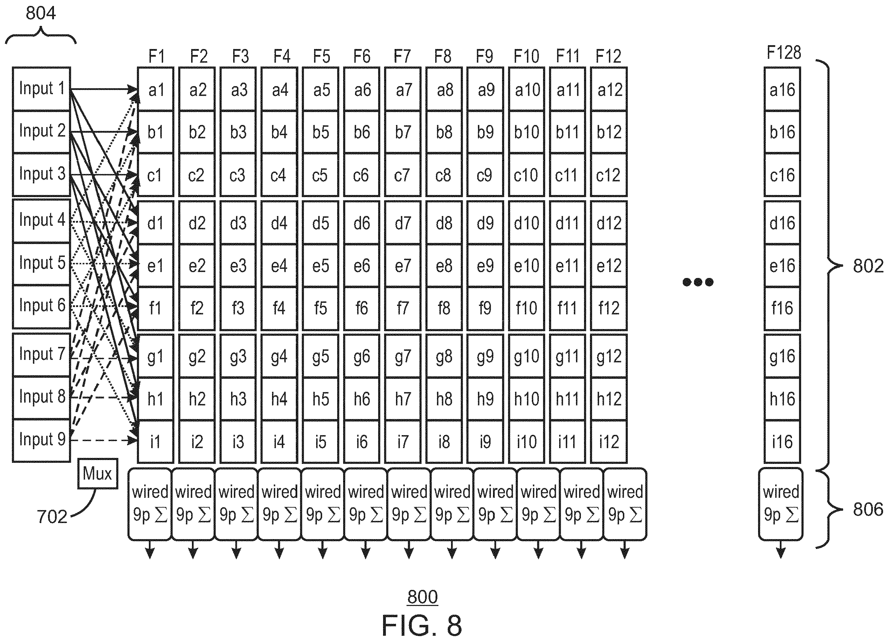

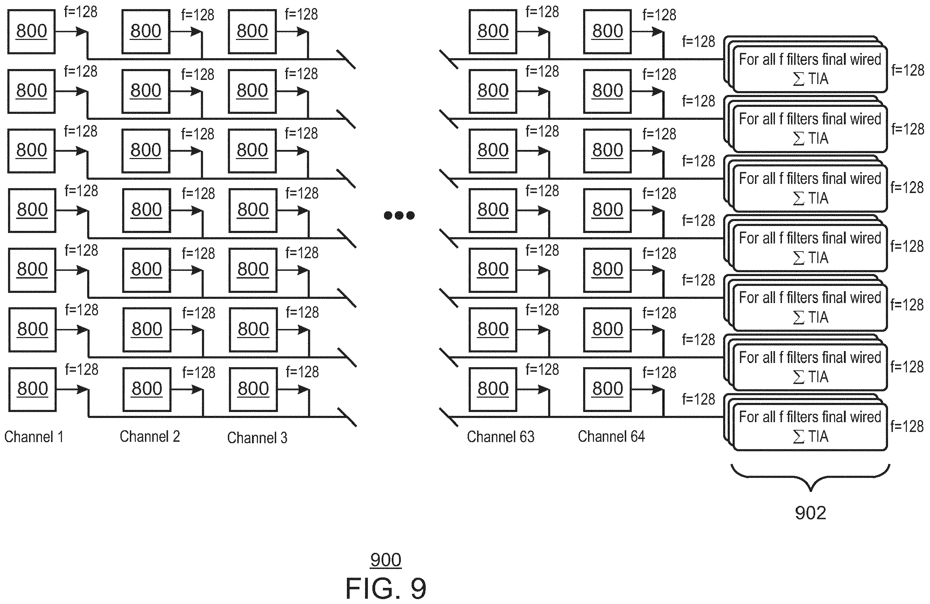

In some embodiments, several neural network layers may be arranged in parallel. For example, in deep convolutional neural networks, data structures are three-dimensional so input data has also depth that is usually described with input channels. Each channel may be filtered by its own filters and then all of the different channels are added together to provide the output (i.e., the dot product values 414). Accordingly, the neural network layers described in relation to Figs. 4-7 can be repeated for each channel of input data and run in parallel in cases where the input data is three-dimensional. Additionally, many different filters may be applied for each channel, such that each filter creates a separate output. Examples of implementations with multiple filters and multiple channels are described below in relation to Figs. 8 and 9.

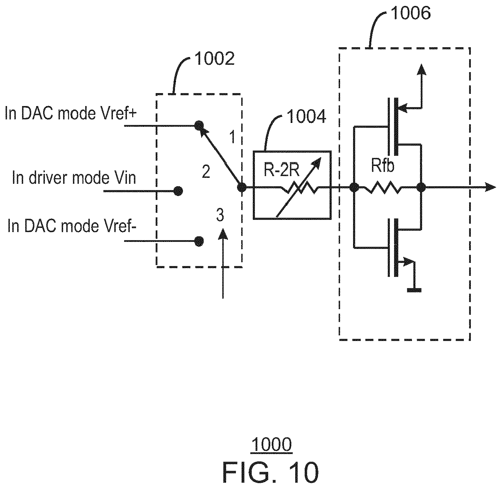

Fig. 8 is an example calculation unit comprising multiple filter layers in accordance with embodiments. The calculation unit includes 128 3-by-3 filters 802 applied to a single channel of input. Each of the 128 filters, labeled F1 to F128, may each have different weight values. Each column represents a separate filter, each filter having nine weight values. Although the weights are shown in the form of a column, it will be appreciated that the mathematical operations performed are the same as those described above in relation to Fig. 7. In other words, weight values a1, b1, and c1 represent the top row of the filter, weight values d1, f1, and g1 represent the second row of the filter, and so on. The inputs from the input feature map are provided by a set of input circuits 804, which may be DACs or analog drivers such as shown below in Fig. 10. The row multiplexer 702 is configured to shift the inputs to different rows of the filters 802 as described in relation to Fig. 7. For a fully analog implementation, analog driving stages may be used instead of DACs.

For each step of the convolution process, the nine inputs provided by the input circuits 804 are multiplied by nine individual weight values that are selected depending on the routing provided by the row multiplexer 702. The multiplied input values are summed for each column by summing the currents that flow through the weights to generate the dot product outputs 806. In this implementation, the resulting dot products are partial dot products because the result will be added to the dot products produced in the same manner for different channels, as shown in Fig. 9.

Fig. 9 is a convolution engine in accordance with embodiments. The convolution engine 900 includes a matrix of calculation units 800 each of which is described more fully in relation to Fig. 8. Each column of calculation units 800 in the series represents a different channel, and as mentioned above in relation to Fig. 8 each calculation unit has 128 different filters. Each of the calculation units 800 is controlled to exhibit the same 128 filters shown in the calculation unit 810. In other words, the filter weights are copied so that each calculation unit 800 in a particular column has the same filter weights, which allows the convolution engine 900 to cover the entire width of the input window. Accordingly each calculation unit 800 in a column will receive a different set of inputs that corresponds with a different portion of the input feature map. Each column of calculation units also receives a different input corresponding to a different input window associated with the channel. Although not shown, it will be appreciated that some of the input values will be multiplexed between different rows to accomplish the convolution calculations as described above in relation to Fig. 7. In this example, the input feature map has a width of 21 elements, so there are 7 rows of calculation units to cover the entire width of the input feature map (7 calculation units X 3 rows per calculation unit). The partial dot products output by each calculation unit at each step of the convolution process are wired together and summed to form a separate total dot product 902 for each of the 128 filters. Each of the total dot products for each filter may be stored to the output feature map corresponding to that filter.

It will be appreciated that the convolution engine shown in Fig. 9 is one example of a convolution engine that can be implemented in accordance with embodiments. The techniques described herein can be extended to a convolution engine with any suitable number of filters, channels, and any suitable input size. In some embodiments, the convolution engine shown in Fig. 9 can be adapted to handle a smaller number of filters and/or a smaller number of channels. For example, if less filters are used, the unused filters can be disengaged using the sign bit (Fig. 2, bits $B_0$ and $B'_0$) as described in relation to Fig. 2. Unused channels can be placed in a standby mode.

According to the embodiments described herein, the basic computing elements include switches and resistors, thereby eliminating a potential need for memory components from each weight element. This greatly reduces the silicon area used by the basic computing elements and enables an implementation where the same filters can be copied over the entire width of the input window. Data can be stationary in the input and the weights, which improves power efficiency and computing performance. Also, data at the output will be available in shorter processing time because calculations are performed for the whole input data width in parallel.

When the whole row width is processed in parallel and data is stationary in the input and the output results are ready in parallel it is much easier to use analog memory. It takes only k cycles to get all outputs, where k is the filter width. Because all data is ready in a short time, the next pooling or convolutional layer can use the data immediately and this means that data storage time can be shorter. In some cases, the analog data values are stored in capacitors, which exhibit leakage that can cause errors. Thus, shorter storage times result in less error. When storage time is shorter it is possible to use smaller capacitors, and this improves silicon area efficiency and cost. This can be key enabler for fully analog neural network as opposed to converting signals from analog to digital and back from digital to analog. This again improves silicon area efficiency or cost and power consumption.

For example, given a convolution layer with 3-by-3 (k=3) filters and (2, 2) pooling then 6 cycles are used to process one new row of data. Because data is stored also in the output memory for 3 rounds then the storage time is 3 X 2 X 3 = 18 cycles. For an 18MHz clock frequency, the data will be stored approximately one microsecond. If leakage current is about a hundred femto amperes and we can tolerate a few hundred microvolt to one millivolt of drooping in analog value, then a capacitor could be as small as a few femto farads, resulting in an analog memory density of almost 10 million analog values in one square millimeter. Compared to a digital implementation with embedded SRAM that use 8-bit data values then 10 million values would occupy almost 10 times more silicon area.

A complete neural network system can be implemented using the convolutional structures described here. To improve silicon area and hardware reuse, the convolution engine can use DAC and ADC converters which could be implemented using the same resistor technology and this would improve area efficiency. If power consumption and performance are key drivers then analog pipeline implementation with all layers could be implemented. Embodiments of the present techniques improve silicon area efficiency, performance, and power efficiency for analog neural network implementations. Figs. 10-13 describe example computing elements that may be used to implement some of the functionalities described above.

Fig. 10 is an example data input circuit in accordance with embodiments. The data input circuit 1000 may be used to provide input to the weights of a filter circuit as described above. The data input circuit 1000 may be configured as either an analog drive circuit or a digital to analog converter depending on the mode, which may be selected using a switch 1002.

The data input circuit 1000 includes a gain control circuit 1004 and a transimpedance amplifier 1006. The gain control circuit 1004 may be any suitable type of adjustable gain circuit, including an R-2R resistance ladder network. In the driver mode, the gain control circuit 1004 receives an input signal, Vin, that has a voltage level representing the analog value to be input to the filter circuit. In this mode, the gain control circuit 1004 is configured to apply a same gain level for each input since the input signal, Vin, already represents the desired analog value.

In the DAC mode, the gain control circuit 1004 is coupled to a positive voltage reference or a negative voltage reference depending on whether the resulting analog value is to be positive or negative. The gain control circuit 1004 is then controlled to determine the analog voltage to be generated.

In either mode, the output of the gain control circuit 1004 is input to the transimpedance amplifier 1006. The gain of the transimpedance amplifier 1006 is fixed and inverting (negative gain) and is determined by the value of the feedback resistor, Rfb. The output of the transimpedance amplifier 1006 may then be coupled to the input to one of the weights of the filter circuit, which is shown as input 202 in Fig. 2.

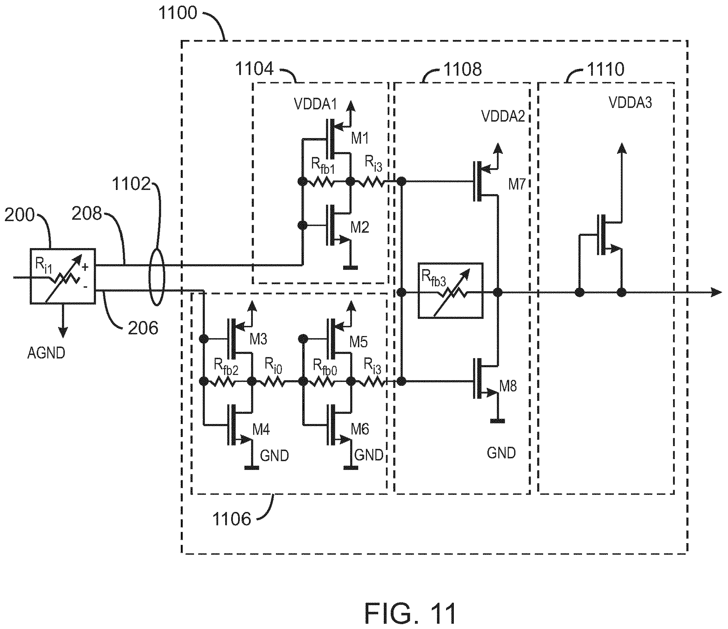

Fig. 11 is an example saturated summing amplifier in accordance with embodiments. The saturated summing amplifier 1100 may be used as a summing circuit for summing the currents output by each of the weights of a filter circuit. The input 1102 of the summing amplifier 1100 is coupled to the output of a plurality of basic computing elements (weights) 200 at the subtraction terminal 206 and the summing terminal 208. The summing terminal 208 is coupled to the input of a transimpedance amplifier 1104. The subtraction terminals 206 are coupled to a summing amplifier 1106, which includes two transimpedance amplifiers coupled in series. Transimpedance amplifiers are inverting amplifiers. Thus, by using two transimpedance amplifiers on the subtraction terminals, and a single transimpedance amplifier on the summing terminals 208, the output of transimpedance amplifier 1104 and the summing amplifier 1106 will have the correct sign relative to one another. Several basic computing elements 200 may be coupled in parallel to the input 1102 of the saturated summing amplifier 1100 to enable the outputs of multiple basic computing elements 200 to be added together.

The outputs of the transimpedance amplifier 1104 and the summing amplifier 1106 are both coupled to the input of saturation amplifier 1108, which is another transimpedance amplifier that smoothly saturates the output signal when the input signal amplitude increases above a certain level. The saturation can be controlled by the voltage VDDA2, the sizes of the M7 and M8 transistors, and the gain, which is equal to $R_{fb3}/R_{i3}$. The output of the saturation amplifier 1108 represents the sum of all of the summing busses 208 and the subtraction busses 206 coupled to the saturated summing amplifier 1100 from the multiple basic computing elements 200. In some embodiments, the output of the summing amplifier 1100 can be coupled to a limiting transistor 1110, which passes positive signals that are smaller than VDDA3 and compresses or limits negative signals. The transistor 1110 may be incorporated for embodiments that use the non-linear Exponential Linear Unit (ELU) activation function.

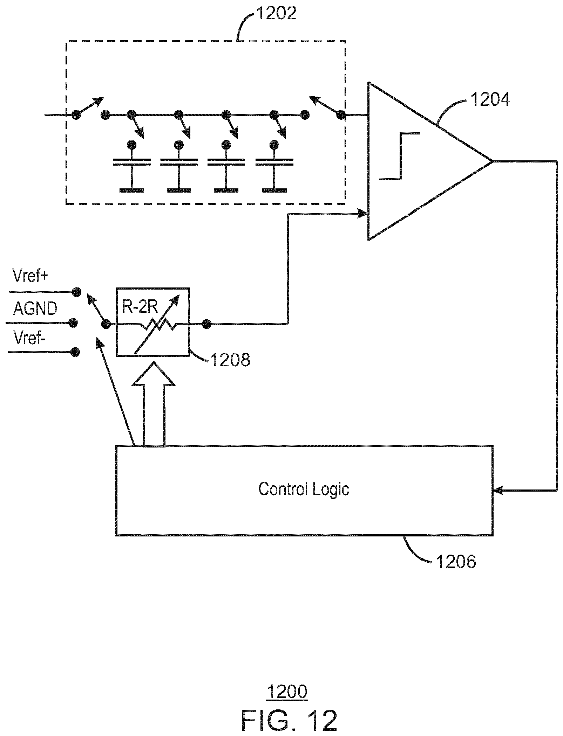

Fig. 12 is an example analog to digital converter in accordance with embodiments. The analog to digital converter (ADC) 1200 is a successive approximation ADC that uses a capacitor bank 1202 to acquire the analog voltage to be converted. The capacitor bank 1202 can be used to pool several analog voltage signals into one analog voltage that is converted to a digital value. To pool several analog inputs together, each capacitor of the capacitor bank 1202 may be switched on in succession to acquire analog inputs that are to be averaged together. Once all of the inputs have been sampled, the total voltage stored to the capacitor bank 1202 can be converted to a digital value. Averaging can be also done by adding four neighbor elements together if those are available. This would use parallel processing of minimum four rows so that neighbor values are available at the same time without storage.

The ADC 1200 also includes a comparator 1204, control logic 1206, and a DAC 1208, which may be an R-2R resistance ladder network. The DAC 1208 receives a digital value from the control logic 1206 and converts the digital value to an analog signal. The signal stored to the capacitor bank 1202 and analog signal output by the DAC 1208 are both input to the comparator 1204, which compares these values to determine the digital value corresponding to the input analog value for each digital bit. The Rectified Linear Unit (ReLu) non-linear activation function can be also be performed with the comparator 1204 on the fly by comparing the input value of the comparator 1204 to analog ground (AGND that is zero reference point). If the input value is positive, then the output voltage is stored to the capacitor and if the input value is negative then AGND value is stored to the capacitor. If max pooling is used then only those capacitors that have positive values will be compared to find max value. This will save unnecessary comparisons and will save some energy.

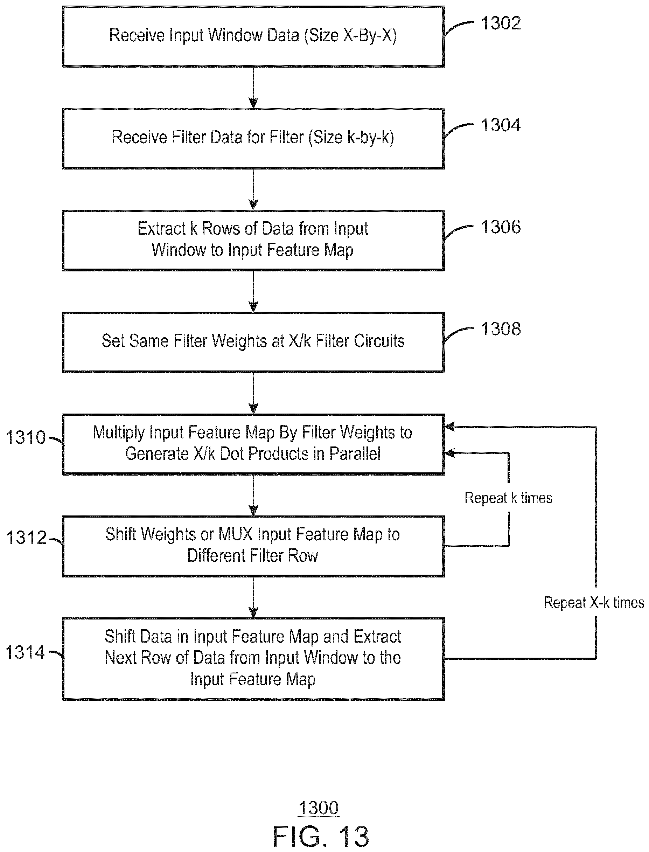

Fig. 13 is a process flow diagram summarizing an example method for performing convolution using an in-memory computing device in accordance with embodiments. The method 1300 may be performed using a convolution engine as described in any of the examples above. The convolution engine may be controlled using any suitable computing device, such as a general purpose computer comprising one or more processors and digital memory. It will be appreciated the processes shown in Fig. 13 may be performed in an order different from what is shown, and that the method 1300 may also include fewer or additional processes depending on the design considerations of a particular embodiment. The method may begin at block 1302.

At block 1302, data from an input window is received. The input window may be a data file such as an image file, for example. In this example, the size of the input window is X-by-X elements (X rows and X columns). However, in other examples, the number of rows may not be equal to the number of columns.

At block 1304, the filter data for a filter is received. In this example, the size of the filter is k-by-k weights (k rows and k columns). However, in other examples, the number of filter rows may not be equal to the number of filter columns.

At block 1306, k full rows of data from the input window are extracted and input to an input feature map. The input feature map may be implemented as a digital memory buffer or as a set of basic computing elements 200.

At block 1308, the filter data is used to set the same filter weights at a plurality of filter circuits. Each filter weight may be an analog computing element, such as the basic computing element 200 of Fig. 2. The number of filter circuits is equal to the width of the input window divided by the width of the filter. The filter weights for each filter circuit will be the same and represent the same filter received at block 1304 coped X/k times to cover the entire width of the input window.

At block 1310, the input feature map is multiplied by the filter weights to generate a set of dot products in parallel. The number of resulting dot products will be equal to the number of filter circuits. To multiply the input feature map by the filter weights means that each element of the input feature map is multiplied by the single weight aligned with that element. Each dot product may be output to a data structure representing the output feature map. In some examples, the dot products produced at block 1310 are partial dot products representing a single input channel, and the corresponding partial dot products for each channel will be added together to generate the final result.

At block 1312, the weights of the filter circuits are shifted or input from the input feature map is multiplexed to different filter rows. In this way, the relative positions of the input feature map elements and the filter weights are shifted to cover multiple superpositions of the filter data and the input data. In some embodiments, the shifting may be accomplished by shifting the filter weights up or down one row within the filter circuits while the input from the input feature map remains unchanged as described in relation to Figs. 5 and 6. In some embodiments, the shifting may be accomplished by shifting the inputs from the input feature may up or down one row while the filter weights remain unchanged, as described in relation to Fig. 7.

After shifting the relative positions of the input feature map elements and the filter weights, the process flow returns to block 1310 and the input feature map is multiplied by the filter weights to generate a new set of dot products. Block 1310 is repeated k times, once for each row of the filter, to generate dot products for each unique overlapping position of the rows of input data with the rows of the filter weights. The process flow then advances to block 1314.

At block 314, new data is imported into the input feature map to include a new row from the input window. The existing k columns of the input feature map will be shifted by one column, with the initial column being eliminated and the next row of the input window being inserted into the input feature map (rows of the input window are translated to columns of the input feature map). Once the input feature map is populated, the process flow returns to block 1310 and blocks 1310 and 1312 are repeated for the new data. The 1314 to 1310 loop repeats X minus k times, which enables the entire input window to be processed. At the end of the last iteration, the convolution process is complete, and the entire output feature map will be populated with the results generated at block 1310.

It will be appreciated that the process described herein is a simplified version of the techniques described above and that an actual implementation of the method 1300 may include more or fewer actions. For example, the method 1300 may be performed for multiple channels of input and/or multiple filters in parallel. All of the filter outputs can be calculated simultaneously while the input data is at the input so that input feature maps don't need to be reloaded again for every filter position of every filter. Additionally, all channels of input may be processed in parallel so that the resulting partial sums can be added together simultaneously without storing the intermediate results. Additionally, it will be appreciated that the processes described are performed by machinery, including in-memory computing circuits, digital circuits, or a combination thereof.

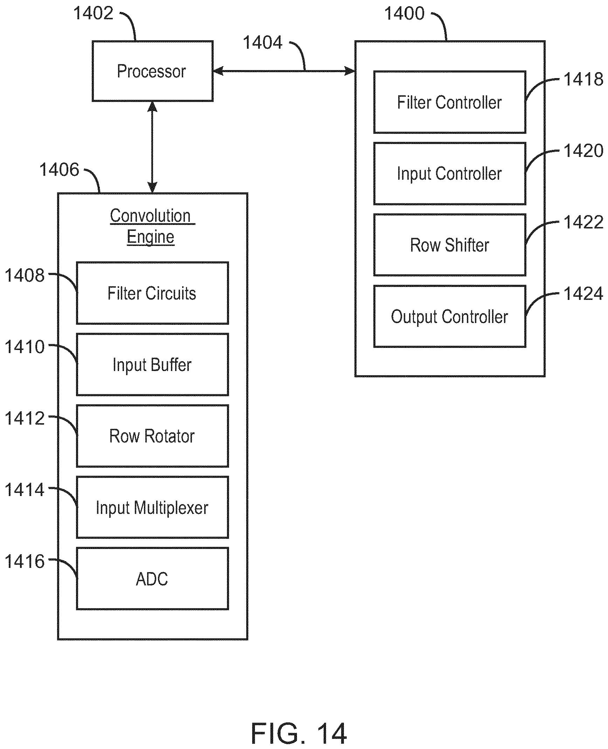

Fig. 14 is a block diagram showing a medium 1400 that contains logic for controlling an in-memory computing device in accordance with embodiments. The medium 1400 may be a computer-readable medium, including a non-transitory medium that stores code that can be accessed by a processor 1402 over a computer bus 1404. For example, the computer-readable medium 1400 can be volatile or nonvolatile data storage device. The medium 1400 can also be a logic unit, such as an Application Specific Integrated Circuit (ASIC), a Field Programmable Gate Array (FPGA), or an arrangement of logic gates implemented in one or more integrated circuits, for example.

The processor 1402 is also connected to convolution engine 1406 such as the convolution engine 900 of Fig. 9. The convolution engine 1406 includes a plurality of filter circuits 1408, each filter circuit having a plurality of weights which may be implemented as the basic computing elements 200 of Fig. 2. The convolution engine 1406 can also include an input buffer 1410 that receives input data from an input window. The input buffer 1410 may be implemented as digital memory coupled to a DAC or an analog memory coupled to an analog driver. The DAC or analog driver may be the data input circuit 1000 shown in Fig. 10. The convolution engine 1406 can also include a data shifter, which may be a row rotator 1412 or a row multiplexer 1414 such as the row rotator 502 of Fig. 5 or the row multiplexer 702 of Fig. 7. The convolution engine 1406 can also optionally include an ADC 1416 such as the ADC 1200 of Fig. 12. In some embodiments, the ADC 1416 may be eliminated. For example, the analog outputs of the convolution engine may be amplified using a non-linear amplifier or pooling amplifier and stored in analog memory. This would allow analog data to be stored and fed into a next layer in an analog fashion.

The medium 1400 may include modules 1418-1424 configured to perform at least some of the techniques described herein when executed by the processor 1402. For example, a filter controller 1418 can include instructions for setting the filter weights of the plurality of filter circuits 1408 by generating control signals that are sent to the basic computing elements 200. Setting the filter weights can include setting the switches of several basic computing elements 200 to cause each basic computing element 200 to route current to a summation terminal or a subtraction terminal. The medium 1400 can also include an input controller 1420 that controls the input of data to the filter circuits 1408. Controlling the input may include controlling the input buffer 1410, which may be a DAC or an analog driver, for example. The medium 1400 can also include a row shifter 1422 that controls which combination of inputs and filter weights are multiplied together. For example, the row shifter 1422 may be configured to control the row rotator 1412 or the row multiplexer 1414, as described above. The medium 1400 may also include an output controller 1424 that is configured to control the ADC 1416 to convert the analog filter outputs to digital values to be stored to digital computer memory.

In some embodiments, the modules 1408-1412 may be modules of computer code configured to direct the operations of the processor 1402. A computing system can be built using the basic computing elements described herein so that control of the convolution operation happens with digital control but mathematical operations (multiplications, divisions, subtractions and additions) happen in analog domain using Ohm's and Kirchoff laws. This enables fast and easy control and fast, low power and full analog precision calculations (not quantized to low number of bits) so this analog digital computer would enable easy to program, very high performance and very low power convolution operations.

The block diagram of Fig. 14 is not intended to indicate that the medium 1400 is to include all of the components shown in Fig. 14. Further, the medium 1400 may include any number of additional components not shown in Fig. 14, depending on the details of the specific implementation.

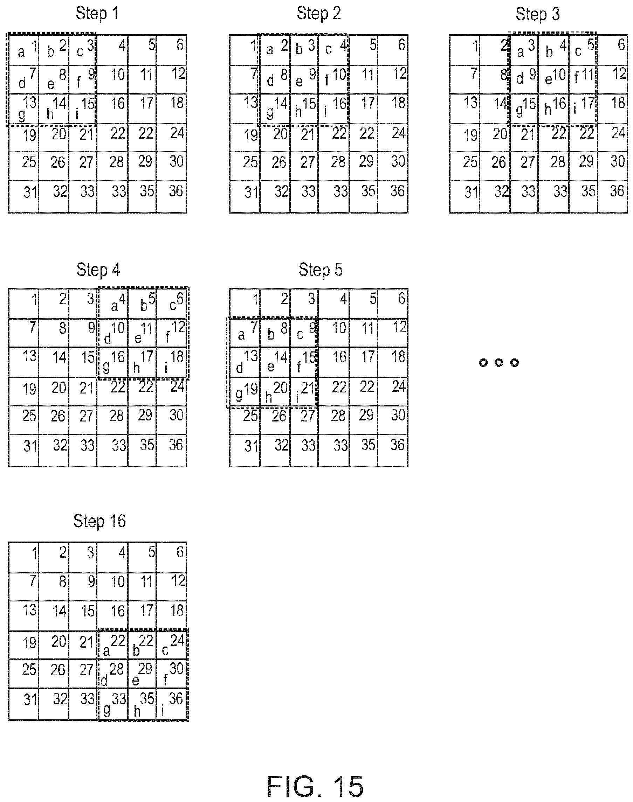

Figs. 15 to 19 illustrate techniques for performing a fully parallel convolution operation for an entire input window. In these embodiments, the inputs and the filter weights are all permanently routed to one another and to the correct outputs to generate the partial dot products, also referred to herein as partial sums. The input values, filter weights, and the filter outputs are routed in such a way as to generate the convolution results without scanning the filter across the input window.

Fig. 15 is an illustration of a convolution operation that can be performed using a 4-by-4 input window with 1p padding and a 3-by-3 filter with filter weights a-i. Each block of the padded input window is represented by a number, while each filter weight is represented by a letter. As described herein, the filter is stepped across the padded input window to cover each of the 16 unique superpositions of the filter and the padded input window. For the sake of simplicity, only the first five and last filter steps are shown.

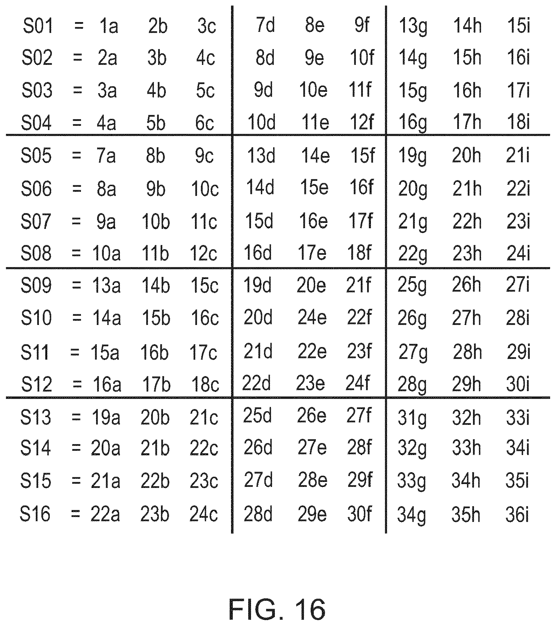

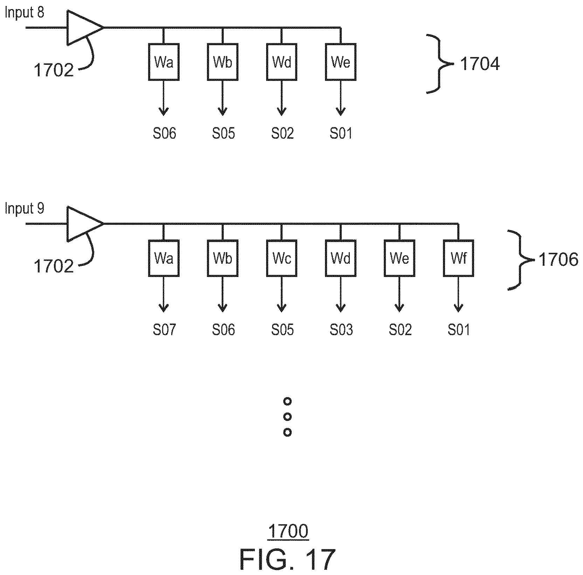

Fig. 16 shows each of the partial sums that will be obtained according to the convolution operation shown in Fig. 15. There are a total of 16 partial sums, each of which is obtained by adding summing the products of the inputs and the filter weights at each filter position. For example, the partial sum, S01, represents the partial sum obtained at the first filter position shown in Fig. 15. The information shown in Fig. 16 can be used to generate the routing scheme used to generate each of the partial sums in parallel. An example implementation is shown in Fig. 17.

Fig. 17 shows part of an example convolution circuit with a routing configuration obtained corresponding to the information shown in Fig. 16. The convolution circuit includes a set of 16 input drivers 1702, one for each of the inputs from the 4-by-4 input window. Each input driver 1702 drives a corresponding filter circuit 1704 1706 that includes a plurality of filter weights. Each of the filter weights may be a basic computing element 200 as shown in Fig. 2. Each weight in each filter circuit may be programmable, and each corresponding weight value will be the same for each set of weights. For example, Wa in the first filter circuit 1704 equals Wa in the second filter circuit 1706. The output of each weight represents the multiplication of one of the inputs from the input window with one of the weights. The outputs are routed to perform a summation of the outputs that correspond with a same partial sum, i.e., partial dot product.

In the example shown in Fig. 17, the padding around the input window is a padding of zeros. Since a zero input results in a zero product and does not add to the partial sum, no input driver is needed for the padding values. Accordingly, the first actual input from the input window is input number 8. With reference to Fig. 16, it can be seen that input 8 appears a total of 4 times. In partial sum 6 input 8 is multiplied by filter weight a, in partial sum 5 input 8 is multiplied by filter weight b, in partial sum 2 input 8 is multiplied by filter weight d, and in partial sum 1 input 8 is multiplied by filter weight e. Accordingly, the input driver for input 8 is routed to the first filter circuit 1704 representing weights a, b, d, and e, and the output of each weight is routed to the corresponding partial sum.

The second filter circuit 1706 is used to receive input from the input driver representing input 9. With reference to Fig. 16, it can be seen that input 9 appears a total of 6 times. In partial sum 7 input 9 is multiplied by filter weight a, in partial sum 6 input 9 is multiplied by filter weight b, in partial sum 5 input 9 is multiplied by filter weight c, in partial sum 3 input 9 is multiplied by filter weight d, in partial sum 2 input 9 is multiplied by filter weight e, and in partial sum 1 input 9 is multiplied by filter weight f. Accordingly, the second filter circuit includes weights a, b, c, d, e, and f and the output of each weight is routed to the corresponding partial sum. For example, the output of weight, Wb, from the first filter circuit 1704 will be routed to the output of weight, Wc, from the second filter circuit 1706 so that these output values will be summed along with the other outputs corresponding to the S05 partial sum.

The circuitry shown in Fig. 17 is repeated for each of the non-padding inputs 8-11, 14-17, 20-23, and 26-29. In this way, the entire input window can processed in parallel to generate the convolution in one step without scanning. In some embodiments, the circuitry for computing the convolution is programmable to account for different input window sizes and different filter sizes. Accordingly, although not shown, each filter circuit for a particular input driver can have a number of weights equal to the number of weights in the overall filter. In such embodiments, particular weights in each filter circuit can be deactivated. For example, input 8 can be connected to 9 weights with only those weights corresponding to weights a, b, d, and e being active while the remaining weights are deactivated. Additionally, the routing of the outputs of each weight can also be re-configured depending aspects of the convolution operation. However, the routing may remain static throughout the entire convolution operation.

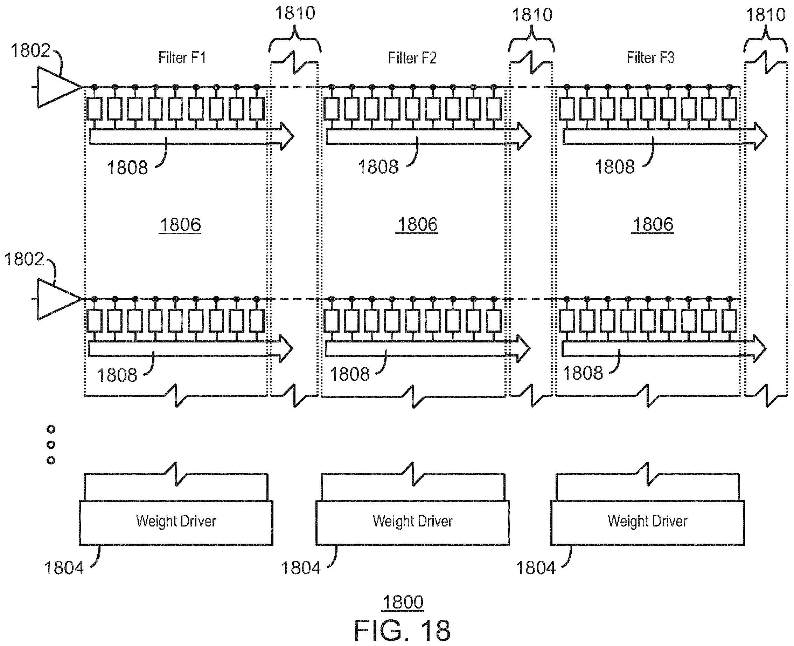

Fig. 18 is a convolution engine configured to perform convolution for an entire input window in parallel using the concepts described above in relation to Figs. 15-17. The convolution engine 1800 includes an input driver 1802 for each input from the input window. For the sake of simplicity, only two input drivers 1802 are shown. However, it will be appreciated the circuitry shown in Fig. 18 may be repeated for each input of the input window. In this example, each input driver 1802 is coupled to three different filters, referred to as Filter 1, Filter 2, and Filter 3 and the convolution engine 1800 is able to perform the convolution for all three filters at the same time. The weights values for a particular filter are repeated for each set of filter circuits of a particular filter and are controlled by weights control signals transmitted from a weight driver 1804 over a weight control bus 1806. Each filter has a separate weight control bus 1806 for setting the weights of that particular filter. The outputs of each filter circuit are routed to the correct partial sum at the connections between a filter output bus 1808 and a partial sum wire bus 1810.

In some embodiments, two or more convolution engines 1800 may be coupled together to handle additional channels of input. In such embodiments, the weight drivers 1804 may be configured to control the weights of all the filters, and each convolution engine would receive a different set of inputs corresponding to the specific channel. The partial sums from each convolution engine 1800 can then be wired together to sum the outputs from the different channels.

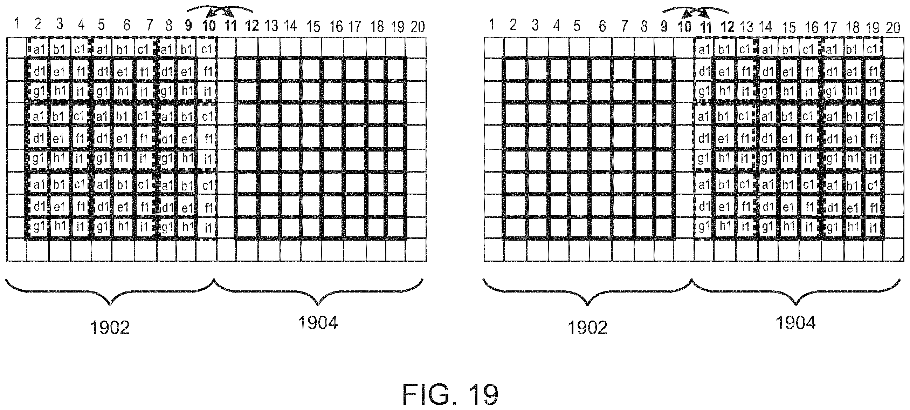

Fig. 19 describes a technique wherein multiple convolution engines can be combined to handle larger input window size. Fig. 19 represents the combination of two convolution engines to process a 16-by-8 input window (16 inputs in the X directions, and 8 inputs in the Y direction). To determine the routings, the input window is split into two separate 8-by-8 input windows, referred to herein as the left side neighbor 1902 and right side neighbor 1904. Each input window also includes padding around the perimeter. The horizontal (X) dimension expansion is implemented by copying the input window data of the first column of the right-side neighbor (column 12) to last column of the left-side neighbor that is the padding area (column 10) and copying the input window data of last column of the left side neighbor (column 9) to first column of the right side neighbor that is the padding area (column 11). In this way, when the filter is shifted from the left side neighbor 1902 to the right side neighbor 1904, it will appear as though the filter is moving across a continuous input area. The partial sums can be determined for each neighbor in similar manner as described above in relation to Figs. 15 and 16 and the information can be used to configure the routing for two different convolution engines.

Although only the horizontal expansion is shown, it will be appreciated that a similar process may be used to perform a vertical expansion. The vertical (Y) dimension expansion is implemented by copying the input data of the first row of the lower convolution engine to the bottom row of the higher convolution engine padding area and copying the input data of last row of higher convolution engine to the top row of lower convolution engine padding area. With 4 convolution engines configured as described above, the input size can be doubled. For example, four 8-by-8 convolution engines combined can handle a 16-by-16 input window just by copying inner peripheral data across the convolution engines. In this way, a system with a large number of smaller convolution engines and can be combined to handle larger input sizes. In some embodiments, convolution engines can be combined to handle the entire input window area. Additionally, convolution engines can be combined so that they can process the entire input width but not all rows. For an example, a system could have 128 10-by-10 convolution engines each with 32 filters. Such a system could process 128 channels with 8x8 input size and 1p padding each having 32 filters. Then these units could be combined to process 32 channels with 16-by-16 input and 1p padding or 32 channels that can handle 32-by-8 input size each having 32 filters. In this last case, processing may then require 4 steps to cover entire input area of 32x32.

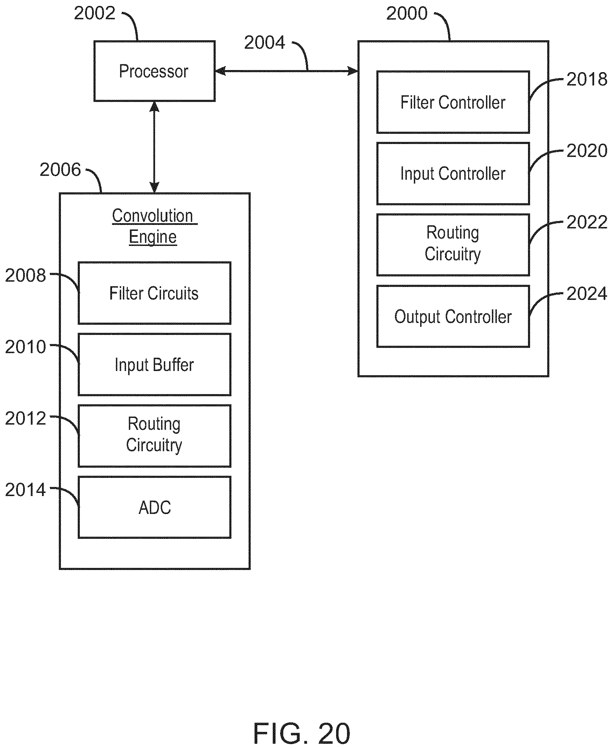

Fig. 20 is a block diagram showing a medium 2000 that contains logic for controlling an in-memory computing device configured to perform a convolution operation for a full input window in parallel in accordance with embodiments. The medium 2000 may be a computer-readable medium, including a non-transitory medium that stores code that can be accessed by a processor 2002 over a computer bus 2004. For example, the computer-readable medium 2000 can be volatile or nonvolatile data storage device. The medium 2000 can also be a logic unit, such as an Application Specific Integrated Circuit (ASIC), a Field Programmable Gate Array (FPGA), or an arrangement of logic gates implemented in one or more integrated circuits, for example.

The processor 2002 is also connected to convolution engine 2006 such as the convolution engine 1800 of Fig. 18. The convolution engine 2006 includes a plurality of filter circuits 2008, each filter circuit having a plurality of weights which may be implemented as the basic computing elements 200 of Fig. 2. The convolution engine 2006 can also include an input buffer 2010 that receives input data from an input window. The input buffer 2010 may be implemented as digital memory coupled to a DAC or an analog memory coupled to an analog driver. The DAC or analog driver may be the input drivers 1702 and 1802 shown in Figs. 17 and 18. In some embodiments, the convolution engine 2006 can also include routing circuitry 2012 that can be controlled to route the outputs of the filter circuits 2008 to the correct dot products or partial sums as described in relation to Figs. 17 and 18. The convolution engine 2006 can also optionally include an ADC 2014 such as the ADC 1200 of Fig. 12. In some embodiments, the ADC 2014 may be eliminated. For example, the analog outputs of the convolution engine may be amplified using a non-linear amplifier or pooling amplifier and stored in analog memory. This would allow analog data to be stored and fed into a next layer in an analog fashion.

The medium 2000 may include modules 2018-2024 configured to perform at least some of the techniques described herein when executed by the processor 2002. For example, a filter controller 2018 can include instructions for setting the filter weights of the plurality of filter circuits 2008 and enabling or disabling particular filter weights by generating control signals that are sent to the basic computing elements 200. Setting the filter weights can include setting the switches of several basic computing elements 200 to cause each basic computing element 200 to route current to a summation terminal or a subtraction terminal. The medium 2000 can also include an input controller 2020 that controls the input of data to the filter circuits 2008. Controlling the input may include controlling the input buffer 2010, which may be a DAC or an analog driver, for example. The medium 2000 can also include a routing controller 2022 that controls the routing circuitry 2012 to route the filter weight outputs to the correct partial sums. Although the routing may be adjustable depending on the design of a particular neural network, it will be appreciated that the routing will remain fixed for a particular convolution operation. Furthermore, in some embodiments, the routing may be fixed and not reconfigurable, in which case the routing circuitry 2012 and routing controller 2022 may be eliminated. The medium 2000 may also include an output controller 2014 that is configured to control the ADC 2016 to convert the analog filter outputs to digital values to be stored to digital computer memory.

In some embodiments, the modules 2008-2012 may be modules of computer code configured to direct the operations of the processor 2002. A computing system can be built using the basic computing elements described herein so that control of the convolution operation happens with digital control but mathematical operations (multiplications, divisions, subtractions and additions) happen in analog domain using Ohm's and Kirchoff laws.

The block diagram of Fig. 20 is not intended to indicate that the medium 2000 is to include all of the components shown in Fig. 20. Further, the medium 2000 may include any number of additional components not shown in Fig. 20, depending on the details of the specific implementation.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus comprising:

a plurality of analog filter circuits (1408, 2008), each analog filter circuit to receive a plurality of weight control signals (210) corresponding to a filter (102), wherein the filter is replicated across the plurality of analog filter circuits to cover at least an entire width of an input window (104); a plurality of input drivers (804, 1702, 1802) to provide input signals to the plurality of analog filter circuits, wherein the input signals comprise at least one full row of the input window; and

a processor (1402, 2002) to generate the weight control signals to set a plurality of filter weights of each analog filter circuit to generate a dot product (304) for each analog filter circuit by multiplying the input signals and the plurality of weights, wherein the dot products are stored to an output feature map (106) representing a convolution of the input window and the filter.

2. The apparatus of claim 1, wherein the dot product is a partial dot product computed for a single channel of input, the apparatus further comprising:

additional analog filter circuits for processing additional input channels to generate additional partial dot products; and
and a summing circuit (1100) to sum the partial dot products generated for each analog filter circuit and each corresponding additional analog filter circuit.

3. The apparatus of claim 1 or 2, wherein each weight of each analog filter circuit is applied by a basic computing element (200) configured to multiply the weight by a corresponding input from the input feature map in an analog domain.

4. The apparatus of claim 3, wherein the basic computing element comprises a resistance (216, 218) ladder network and a switch (212) configured to route current from the resistance ladder network to an output terminal (206, 208) or to ground (204).

5. The apparatus of any one of claims 1 to 4, wherein the apparatus is configured to process the input window in a plurality of steps, and at each step the plurality of filter circuits process an entire width of the input window.

6. The apparatus of claim 5, comprising a data shifter (502, 702, 1412, 1414) to shift the plurality of weights and the input signals relative to one another to cover each row position combination between the input window and the plurality of analog filter circuits.

7. The apparatus of claim 6, wherein the data shifter is a row rotator (502, 1412) configured to shift the plurality of weights applied to the analog filter circuits to each row position of each analog filter circuit.

8. The apparatus of claim 6, wherein the data shifter is a row multiplexer (702, 1414) configured to shift the input data to each row position of each analog filter circuit.

9. The apparatus of any one of claims 1 to 4, wherein the entire input window is processed in parallel to perform the convolution.

10. The apparatus of claim 9, wherein the plurality of input drivers comprise an input driver (1702, 1802) for each input of the input window; each input driver is coupled to a separate filter circuit (1704, 1706) comprising a plurality of filter weights, wherein the output of each filter weight is routed to sum the output to a correct one of the dot products, and wherein the routing of the input signals to the weights and the routing of the output of each filter weight (1808, 1810) remains static for an entire convolution operation.

11. A method comprising:

receiving (1302) an input window (104) and a filter (102) to be processed according to a convolution operation;
setting (1308) weights of a plurality of analog filter circuits (1408, 2008) corresponding to the filter, wherein the filter is replicated across the plurality of analog filter circuits to cover at least an entire width of the input window;
providing (1306) input signals to the plurality of analog filter circuits to generate a plurality of dot products (304) in parallel, wherein the input signals represent at least an entire width of the input window; and
storing (1310) each generated dot product to an output feature map (106) representing a convolution of the input window and the filter.

12. The method of claim 11, wherein the input window is processed in a plurality of steps, and at each step the plurality of filter analog circuits process an entire width of the input window, the method further comprising, at each step, shifting (1312) the plurality of weights and the input signals relative to one another to cover each row position combination between the input window and the plurality of analog filter circuits.

13. The method of claim 12, wherein shifting the plurality of weights and the input signals relative to one another comprises:

shifting the plurality of weights applied to the analog filter circuits while the input signals from the input window remains stationary; or
shifting the input data while the weights applied to the analog filter circuits remain stationary.

14. The method of claim 11, wherein the entire input window is processed in parallel to perform the convolution.

15. The method of claim 14, wherein each filter comprises a plurality of weights, the method comprising determining a routing configuration for routing the input signals to the weights and for routing an output of each weight to a summing circuit (1100) of a corresponding dot product of the plurality of dot products, wherein the routing configuration remains static for the entire convolution operation.

FIG. 1

EP 4 075 342 A1

$\underline{200}$

FIG. 2

300

302

304

9 Analog
Inputs

| $a_X$ | $b_X$ | $c_X$ |
| $d_X$ | $e_X$ | $f_X$ |
| $g_X$ | $h_X$ | $i_X$ |

Dot
Product

9 Sets of
Control
Bits

306

FIG. 3

408

410

3
$a_X$ $b_X$ $c_X$ — 402
3
$d_X$ $e_X$ $f_X$
3
$g_X$ $h_X$ $i_X$

Dot Product — 414

3
$a_X$ $b_X$ $c_X$ — 404
3
$d_X$ $e_X$ $f_X$
3
$g_X$ $h_X$ $i_X$

Dot Product — 414

3
$a_X$ $b_X$ $c_X$ — 406
3
$d_X$ $e_X$ $f_X$
3
$g_X$ $h_X$ $i_X$

Dot Product — 414

9 Sets of Control Bits

412

400
FIG. 4

500

FIG. 5

FIG. 6

FIG. 7

802

806

F128 | a16 | b16 | c16 | d16 | e16 | f16 | g16 | h16 | i16 | wired 9p Σ

F1 | F2 | F3 | F4 | F5 | F6 | F7 | F8 | F9 | F10 | F11 | F12

a1 a2 a3 a4 a5 a6 a7 a8 a9 a10 a11 a12
b1 b2 b3 b4 b5 b6 b7 b8 b9 b10 b11 b12
c1 c2 c3 c4 c5 c6 c7 c8 c9 c10 c11 c12
d1 d2 d3 d4 d5 d6 d7 d8 d9 d10 d11 d12
e1 e2 e3 e4 e5 e6 e7 e8 e9 e10 e11 e12
f1 f2 f3 f4 f5 f6 f7 f8 f9 f10 f11 f12
g1 g2 g3 g4 g5 g6 g7 g8 g9 g10 g11 g12
h1 h2 h3 h4 h5 h6 h7 h8 h9 h10 h11 h12
i1 i2 i3 i4 i5 i6 i7 i8 i9 i10 i11 i12

wired 9p Σ

804

Input 1
Input 2
Input 3
Input 4
Input 5
Input 6
Input 7
Input 8
Input 9

Mux

702

800

FIG. 8

FIG. 9

900

902

1000
FIG. 10

FIG. 11

1200
FIG. 12

Receive Input Window Data (Size X-By-X) — 1302

Receive Filter Data for Filter (Size k-by-k) — 1304

Extract k Rows of Data from Input Window to Input Feature Map — 1306

Set Same Filter Weights at X/k Filter Circuits — 1308

1310 — Multiply Input Feature Map By Filter Weights to Generate X/k Dot Products in Parallel

Repeat k times

1312 — Shift Weights or MUX Input Feature Map to Different Filter Row

Repeat X-k times

1314 — Shift Data in Input Feature Map and Extract Next Row of Data from Input Window to the Input Feature Map

1300

FIG. 13

FIG. 14

FIG. 15

| | | | | | | | | | | | |
|---|---|---|---|---|---|---|---|---|---|---|---|
| S01 | = | 1a | 2b | 3c | 7d | 8e | 9f | 13g | 14h | 15i |
| S02 | = | 2a | 3b | 4c | 8d | 9e | 10f | 14g | 15h | 16i |
| S03 | = | 3a | 4b | 5c | 9d | 10e | 11f | 15g | 16h | 17i |
| S04 | = | 4a | 5b | 6c | 10d | 11e | 12f | 16g | 17h | 18i |
| S05 | = | 7a | 8b | 9c | 13d | 14e | 15f | 19g | 20h | 21i |
| S06 | = | 8a | 9b | 10c | 14d | 15e | 16f | 20g | 21h | 22i |
| S07 | = | 9a | 10b | 11c | 15d | 16e | 17f | 21g | 22h | 23i |
| S08 | = | 10a | 11b | 12c | 16d | 17e | 18f | 22g | 23h | 24i |
| S09 | = | 13a | 14b | 15c | 19d | 20e | 21f | 25g | 26h | 27i |
| S10 | = | 14a | 15b | 16c | 20d | 24e | 22f | 26g | 27h | 28i |
| S11 | = | 15a | 16b | 17c | 21d | 22e | 23f | 27g | 28h | 29i |
| S12 | = | 16a | 17b | 18c | 22d | 23e | 24f | 28g | 29h | 30i |
| S13 | = | 19a | 20b | 21c | 25d | 26e | 27f | 31g | 32h | 33i |
| S14 | = | 20a | 21b | 22c | 26d | 27e | 28f | 32g | 33h | 34i |
| S15 | = | 21a | 22b | 23c | 27d | 28e | 29f | 33g | 34h | 35i |
| S16 | = | 22a | 23b | 24c | 28d | 29e | 30f | 34g | 35h | 36i |

FIG. 16

Input 8

1702

Wa | Wb | Wd | We

} 1704

S06   S05   S02   S01

Input 9

1702

Wa | Wb | Wc | Wd | We | Wf

} 1706

S07   S06   S05   S03   S02   S01

○
○
○

1700

FIG. 17

1800

FIG. 18

FIG. 19

EP 4 075 342 A1

FIG. 20

Europäisches
Patentamt

European
Patent Office

Office européen
des brevets

**EUROPEAN SEARCH REPORT**

Application Number

EP 21 16 8515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/110985 A1 (KATAEVA IRINA [JP] ET AL) 9 April 2020 (2020-04-09) * abstract; figures 2-6 * * paragraph [0038] - paragraph [0077] * ----- | 1-15 | INV. G06N3/063 G06N3/04 |
| A | US 2020/356848 A1 (LESSO JOHN PAUL [GB] ET AL) 12 November 2020 (2020-11-12) * abstract; figure 3 * * paragraph [0096] - paragraph [0099] * ----- | 1-15 | |
| A | US 2021/081775 A1 (LEOBANDUNG EFFENDI [US] ET AL) 18 March 2021 (2021-03-18) * abstract; figures 1, 2A-2C, 3, 5 * * paragraph [0016] - paragraph [0043] * * paragraph [0051] - paragraph [0060] * ----- | 1-15 | |

TECHNICAL FIELDS
SEARCHED (IPC)

G06N

The present search report has been drawn up for all claims

| Place of search | Date of completion of the search | Examiner |
|---|---|---|
| The Hague | 27 September 2021 | Rousset, Antoine |

EPO FORM 1503 03.82 (P04C01)

## ANNEX TO THE EUROPEAN SEARCH REPORT
## ON EUROPEAN PATENT APPLICATION NO.

EP 21 16 8515

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2021

| Patent document cited in search report | | Publication date | Patent family member(s) | | Publication date |
|---|---|---|---|---|---|
| US 2020110985 | A1 | 09-04-2020 | JP 2020057278 A<br>US 2020110985 A1 | | 09-04-2020<br>09-04-2020 |
| US 2020356848 | A1 | 12-11-2020 | GB 2583790 A<br>US 2020356848 A1 | | 11-11-2020<br>12-11-2020 |
| US 2021081775 | A1 | 18-03-2021 | NONE | | |

EPO FORM P0459

For more details about this annex : see Official Journal of the European Patent Office, No. 12/82